# EUROPEAN PATENT SPECIFICATION

(11) **EP 0 586 004 B1**
(45) Date of publication and mention of the grant of the patent: **10.06.1998**
(21) Application number: 93202465.6
(22) Date of filing: 24.08.1993
(51) Int. Cl.: A01K 1/015, C05F 17/00

(54) **Method for the production of fermentation product and the applications of the fermentation product and the pellets.**
Verfahren zur Herstellung von Fermentationprodukten und die Verwendung der Fermentationsprodukte und der Granulate
Méthode de production de produits fermentes et l'application du produit fermenté et des granulés

(30) Priority: 24.08.1992 NL 9201500
(43) Date of publication of application: 09.03.1994
(73) Proprietor: Molenaar, Jan, NL-2141 CL Vijfhuizen (NL)
(72) Inventor: Molenaar, Jan, NL-2141 CL Vijfhuizen (NL)
(74) Representative: De Hoop, Eric

(56) References cited:
- DE-A- 2 558 257
- DE-A- 3 017 352

## Description

The invention relates to a method for the production of a fermentation product, wherein ripe fermentable material is subjected to treatment with worms, bacteria and fungi, after which the fermentation product is dug off.

In the German "Offenlegungsschrift" DE-A-2.558.257 and DE-A-3017352, a compost has been described, obtained from waste or sludge, of average maturation, water content between 30 and 55%, pH between 5 and 6, organic matter content between 55 and 70% and a fine-grained structure. This compost contains micro-organisms, nematodes and enchitreae. This compost is used as a floor-forming means in pens, where it decomposes animal droppings. The effects ate limited, however. It has become evident that further treatment of this compost yields a product with remarkable properties and an abundance of applications.

The method according to the invention is characterized in that said fermentation product is pre-dehydrated, after digging off, at a temperature of less than 50°C, after which it is ground and sifted, if necessary, and is subjected to dessication, during which the temperature of the fermentation product does not rise above 30°C. Its composition ensures that the product of this method, according to the invention, will be capable of decomposing any biological material, and animal droppings in particular, quickly and odourlessly.

Apart from the earlier-mentioned compost from the German "Offenlegungsschrift" 2.558.257 all kinds of known organic materials, which can be consumed by worms, can be used as basic material, on the understanding that these must be free from harmful quantities of heavy metals, PAKs, PCBs and PBBs (= environmental dangerous substances). The organic materials must have a minimal maturation to be fit for consumption by worms, like Lumbricideae, Eisenieae, Allolobophoreae, Dendrobaeneae, and the African Nightcrawler.

Ripe compost obtained from vegetable, fruit and garden wastes is very suitable. It is generally considered that the fermentable material which is used as basic material for the method according to the invention, must have such a degree of maturation that no heating ensues. Stable-manure or chicken-manure can also be used as basic materials.

The basic material is treated in a controlled room, in which temperature and humidity is fully adjustable, with worms and fungi. The temperature in this room is between 0° and 30°C, preferably between 23° and 27°C.

First of all, a layer of basic material with a height of 10 to 50 cms, preferably circa 30 cms, is put in the room. To this material worms from one or more of the earlier-mentioned kinds are introduced, in quantities of 50 to 250, preferably 80 to 120 specimens per m².

A mixture of various soil bacteria and fungi is also scattered across the layer of basic material. These bacteria may include Pseudomonas fluorescens, Cellevibrio sp., Bacillus cereus sp. and spp., Azotobacter sp., Flavobacterium sp., bacteria from the species of Rhizobium spp. The fungi may include Aspergillus sp., Basidiomycetes sp., fungi from the species of Micorrhizae, and the low-temperature species of Trichoderma harzianum sp. It is also possible to use mixtures which are generally available, like Bio-vegetal, Bio-mix, Bacto-mix and so on, in quantities ranging from 5 to 300, preferably 30 to 150 grms/m².

To ensure the quick growth of worms and bacteria preferably a quantity of albuminous nutrients are scattered across the basic material. This may be in the form of meal-worm manure, in a quantity of 80 to 120 grms/m²; or in the form of various kinds of calf-milk powder, in a quantity of 40 to 60 grms/m² or in the form of blood powder. Of course, it is also possible to mix the worms, bacteria, fungi and/or the albuminous nutrients with the basic material instead of scattering them across it. Because scattering is technically easier, this process is preferred.

The worms and bacteria multiply quickly when these albuminous nutrients are present. When the albuminous nutrients have been consumed, the worms and bacteria are left with the harder to consume, fermentable material. As a reaction to this the bacteria produce enzymes which can convert organic materials. The worms, which can consume quantities of organic materials in the order of their own body weight a day, will excrete digesting enzymes in their excrement.

When the layer, which was brought in first, is fully developed with worms, bacteria and fungi, after 80 to 120 days, a new layer of basic material can be applied, if one so wishes. This layer has a height of 5 cms, at most. Preferably, a mixture of albuminous nutrients, bacteria and fungi is mixed beforehand in a quantity of 1 to 4 kgs food/m³ and 0.5 to 1.5 bacteria-mix/m³, before it is added to the basic material. The new layer is developed within 2 to 5 days, after which a new layer can be added.

Before adding a new layer, a single sugar-acid is preferably applied to the existing layer, strengthening the enzymes, formed by bacteria and worms, and intensifying and accelerating in this way the fermentation process. Glucono-y-lacton, or glucuronolacton, can be used in a quantity of 1.75 to 5 grms/m².

It is also possible to confine oneself to a one-step procedure, which means that no new layers are added to the first layer. The multiple layer procedure is preferred, however, because it results in a fermentation product of a higher quantity. Moreover, a multiple layer procedure is economically more efficient.

When the final layer is fully developed, removing can be started. In a multiple layer procedure this can generally start when the fermentation product layer has reached a height of at least 60 cms. First of all, the upper layer of 5 to 15 cms, which contains the worms, is removed and put aside. Next the remainder of the fermentation product is dug off. It is often the case that the lowest 5 to 15 cms of the fermentation product are left as a basis for a new production layer. The layer containing the worms is then put on the lowest layer and covered with a new quantity of basic material, so that a new production process can start.

The fermentation product which has been dug off, is be pre-dehydrated at a temperature of 50°C at most, to avoid sterilization. When the product is air-dried, at a humidity of 25 to 35%, the fermentation product can, if necessary, be ground and sifted. The fermentation product, depending on its eventual use, can be desiccated after grinding and sifting, or granulated before desiccation. This can be done through granulating or pelleting. After the interception and extraction of the dust, originating during desiccation, this dust can be added as a supplement to the fermentation product before pelleting or granulating. In the same way, organic additives, for example, attractives for a particular group of animals, or extra sugar-acid can be used as a supplement.

During the desiccation process, the bacteria and fungi are forced back to spore level. During the desiccation process the temperature of the fermentation product must not rise above 30°C to avoid killing of the bacteria and fungi. Desiccation can, for example, be done in a silo with ventilation air of at most 30°C. After desiccation the humidity of the fermentation product will be 10 to 15%. After desiccation there will be a final product, ready for packing, its qualities guaranteed for at least one year.

The fermentation products and pellets, according to the invention, have many applications. For example, the pellets can be used as litter in pets' pens; as a means of degrading oils and greases, for example, on garage floors; or as a filter material in purification systems, for example, to filter polluted effluent from plant nutrient systems. Other applications are also possible. The pellets are especially useful as cat's box litter.

The fermentation product, is suitable, for example, as a supplement to garden and pot-plant soil, or as a fermentation starter in trash cans for vegetable, fruit and garden waste, where its use will reduce stench.

The fermentation product contains intestinal flora and enzymes originating from the worms, bacteria and fungi with which it has been prepared. The bacteria and fungi are moreover in survival form, for example, at spore level, present in the desiccated fermentation product. They are present, naturally, in the non-dried product.

If the fermentation product is moisturized through urine, for example, in the case of pellets used in pets' pens, the organisms resume life again. Fungi occupy the droppings, produced by animals, in the dry area and grow mouldy. Animal diseases, which are excreted in the droppings, will be encapsulated and broken down by the bacteria, fungi and enzymes. In closed rooms, the bacteria and fungi will transform, among other things, the ammonia, which is produced by the naturally present urea fermentators present in urine, into nitrate (=nitrification) and nitrogen (=denitrification).

In this way the droppings will be decomposed odourlessly through the cat's box litter. The total saturation point of the pellets, expressed in percentage of weight, is 200%. When used as cat's box litter, it is replaced when the weight increases to 100 to 125%.

The size of the fermentation pellets depends on its application. Generally, the diameter is 4 to 10 mm, with a length of 10 to 30 mm. Preferably, the pellets are round, but other forms are also possible. When used as cat's box litter, the pellets have a diameter of 5 to 6 mm and a length of 15 to 20 mm. When used for smaller domestic animals, such as pigeons, cage-birds, hamsters, rabbits and so on, the diameter of the pellet size is, preferably, 4 to 5 mm with a length of about 10 mm. When used in stables, or zoos, for example, for horses, pigs and so on, the diameter of the pellets is 8 to 10 mm with a length of 25 to 30 mm.

After use, the pellets of the fermentation product can be homogenized and put back to the first step of the production process. Up to a quarter of the basic material may consist of used fermentation product. A supplement of the fermentation product is suitable - after (and, if preferred, before) - for application as fertilizer or as a supplement to garden or pot-plant soils.

Where re-use is not possible, the used pellets can be put into trash cans for vegetable, fruit and garden waste; all this in contrast with the mineral cat's box litters, so far used, or the final product from German "Offenlegungsschrift" 3.017.352, which contains 10% of potter's clay or, as the case may be, bentonite, which has to be dumped.

### Example 1

The floor of a controlled room, with a temperature of 25°C, was covered with ripe compost consisting of vegetable, fruit and garden waste. The layer was 30 cms high. Worms were scattered across in quantities of circa 100 specimens per m². The worms belonged to the kinds of Lumbricideae and Eisenieae, in a 50-50% ratio. Next a mixture of soil, fungi and bacteria, which are generally available, was scattered across the compost, in a quantity of 100 grms/m², followed by the scattering of meal-worm manure in a quantity of 100 grms/m². After 100 days the layer was completely developed. This layer was then covered with 5 grms/m² of Glucono-y-lacton, after which a new layer of compost was added to the existing layer, with a height of 5 cms. Beforehand, the new compost was mixed with 2 Kg. of meal-worm manure and 1 Kg. of bacteria mix per m³. After 3 days the new layer was completely developed, and, after the scattering of 3.5 grms/m² of sugar-acid, a new layer, mixed with bacteria and meal-worm manure, was added again. This process was continued till the layer had reached a height of 75 cms. At that point, the upper layer of 15 cms, containing the worms, was dug off, after which 50 cms of the product was removed. The lowest layer of 10 cms remained intact.

The product, which has been dug off, was pre-dehydrated to a humidity of 30%. Next, it was ground and sifted in a sieve with a mesh width of 3 mm, and pelleted into grains with a diameter of 5 mm and a length of 15 mm. The pellets, produced in this way, were desiccated to a humidity of 10%. This product turned out to be excellent cat's box litter.

The layer, containing the worms, dug off before production, was scattered across the lowest layer. Next, this layer was covered again with a ripe compost from vegetable, fruit and garden waste, across which bacteria and meal-worm manure were again scattered. In this way the production process started again.

### Example 2

The production method in Example 1 was repeated, except for the fact that the product was not dried or pelleted after removing but was used at once as a supplement for pot-plant soil.

### Example 3

The production method, according to the invention, is carried out in a controlled box, with a length x breadth x height of 500x100x60 cms. At the backside of the box there is a digging-cylinder, and in the box there is a bottom-chain with bars with which the contents of the box can be moved in the direction of the digging-cylinder. The machine reminds one of a dung spreader. In the box is put a layer with a height of 15 cms of old stable dung or old chicken dung with a Carbon/Nitrate ratio of less than 30:1. Worms are added in quantities of 200 specimens per m², and 0.2 Kg/m² of bacteria and fungi mix and 0.6 Kg/m² of albuminous nutrients are scattered across the layer.

After approximately 3 months the worms will have increased to such an extent that the adding of new layers of basic material can be started. At first, once a week a new layer is added, because the maximum quantity of around 100,000 specimens per m² has not been reached. Adding new layers will be done in such a way that there will develop a sloping line in the direction of the digging-cylinder. At the highest side the new layer will always have a height of around 5 cms, which will result in a growth of the layer of fermentation product of around 3.5 cms. After approximately another 3 months the layer of fermentation product at the highest side will have reached a height of 60 cms, and digging off can start.

In the final 35 cms of the box, seen from the side where the digging-cylinder is attached, the temperature of the fermentation product will be increased to around 40°C.

In this way the worms are driven to the upper part of the fermentation product layer. By moving the bottom-chain, the fermentation product is shifted against the digging-cylinder, and in that way removed out of the box. In this way the upper 10 cms of the fermentation product, viz. the layer containing the worms, are shifted, at the same time, on to a sheet, which is situated at 50 cms from the bottom, in front of the digging-cylinder in the box. The layer containing the worms, which is on the sheet, is caught, and deposited in the space which is cleared by the sifting of the fermentation product.

Now 3 times a week, a layer of basic material with a height of around 2.5 cms is added. Before adding the new layer, around 0.6 grms of sugar-acid per m² is scattered across the old layer. Across the new layer is then scattered a mixture of albuminous nutrients, bacteria and fungi.

This continuous production method will result, at a maximum dig-off speed of 7.5 cms a day, in a fermentation production of 30 to 35 Litres of high-quality produce a day, which can be subjected to the prescribed treatment and used for many suitable applications.

## Claims

1. Method for the production of a fermentation product, wherein ripe fermentable material is subjected to treatment with worms, bacteria and fungi, after which the fermentation product is dug off, **characterized in that** said fermentation product is pre-dehydrated, after digging off, at a temperature lower than 50°C, after which it is ground and sifted, if necessary, and is subjected to desiccation, during which the temperature of the fermentation product does not rise above 30°C.

2. Method of production, according to Claims 1, **characterized in that** ripe compost, consisting of vegetable, fruit and garden waste, is used as basic material.

3. Method of production, according to one of the earlier Claims, **characterized in that** worms of one or more kinds from the groups of Lumbricideae, Eisenieae, Allolobophoreae, Dendrobaeneae and the African Nightcrawler, are used.

4. Method of production, according to one of the earlier Claims, **characterized in that** bacteria are used from one or more kinds, chosen from Pseudomonas fluorescens, Cellevibrio sp., Bacillus cereus sp. and spp., Azotobacter sp., Flavobacterium sp., bacteria from the group of Rhizobium spp.

5. Method of production, according to one of the earlier Claims, **characterized in that** fungi are used from one or more kinds from Aspergillus sp., Basidiomycetes sp., fungi from the group of Micorrhizae and low-temperature species of Trichoderma harzianum sp.

6. Method of production, according to one of the earlier Claims**, characterized in that** treatment of the fermentable product occurs in more than one layer.

7. Method of production, according to one of the earlier Claims, **characterized in that** albuminous nutrients are added to the basic material.

8. Method of production, according to one of the earlier Claims, **characterized in that** a single sugar-acid is added during or after the growing-process.

9. Method of production, according to one of the earlier Claims, **characterized in that** the worms, bacteria, fungi, albuminous nutrients and/or sugars are scattered across the layer of basic material.

10. Method for the production of a pelleted or grained fermentation product, **characterized** by granulating or pelleting the fermentation product, obtained according to the method of any of the preceding claims.

11. Application of fermentation pellets or grains, obtained according to the method of claim 10, as cat's box litter.

12. Application of the fermentation product, obtained according to any of claims 1 to 9 or fermentation pellets or grains, obtained according to Claim 10, as a filter in purification systems.

## Patentansprüche

1. Verfahren zur Herstellung eines Fermentationsprodukts, wobei reifes, fermentierbares Material einer Behandlung mit Würmern, Bakterien und Schimmeln ausgesetzt wird, wonach das Fermentationsprodukt abgetragen wird, **dadurch gekennzeichnet,** dass das Fermentationsprodukt nach dem Abtragen bei einer Temperatur niedriger als 50°C vorgetrocknet wird, dann erforderlichenfalls zermahlt und gesiebt wird, und einer Nachtrocknung ausgesetzt wird, wobei die Temperatur des Fermentationsprodukts während der Nachtrocknung 30°C nicht übersteigt.

2. Herstellungsverfahren nach Anspruch 1, **dadurch gekennzeichnet,** dass reifer Kompost aus Gemüse-, Obst- und Gartenabfall als Ausgangsmaterial benutzt wird.

3. Herstellungsverfahren nach einem der vorhergehenden Ansprüche, **dadurch gekennzeichnet,** dass Würmer einer oder mehreren Sorten gewählt aus den Gruppen Lumbricideae, Eisenieae, Allolobophoreae, Dendrobaeneae und afrikanischen Nachtkriechwürmern benutzt werden.

4. Herstellungsverfahren nach einem der vorhergehenden Ansprüche, **dadurch gekennzeichnet,** dass Bakterien einer oder mehreren Sorten gewählt aus Pseudomonas fluorescens, Cellevibrio sp., Bacilius cereus sp. und spp., Azotobacter sp., Flavobacterium sp., Bakterien aus der Gruppe der Rhizobium spp. benutzt werden.

5. Herstellungsverfahren nach einem der vorhergehenden Ansprüche, **dadurch gekennzeichnet,** dass Schimmel einer oder mehreren Sorten gewählt aus Aspergillus sp., Basidiomycetes sp., Schimmel aus der Micorrhizaegruppe, und den Niedrig-Temperatursorten der Trichoderma Harzianum sp. benutzt werden.

6. Herstellungsverfahren nach einem der vorhergehenden Ansprüche, **dadurch gekennzeichnet,** dass die Behandlung des fermentierbaren Produkts in mehr als eine Schicht stattfindet.

7. Herstellungsverfahren nach einem der vorhergehenden Ansprüche, **dadurch gekennzeichnet,** dass albuminhaltige Nährstoffe dem Ausgangsmaterial hinzugefügt werden.

8. Herstellungsverfahren nach einem der vorhergehenden Ansprüche, **dadurch gekennzeichnet,** dass eine einfache Zuckersäure während oder nach dem Wachstumprozess hinzugefügt wird.

9. Herstellungsverfahren nach einem der vorhergehenden Ansprüche, **dadurch gekennzeichnet,** dass die Würmer, Bakterien, Schimmel, albuminhaltige Nährstoffe und/oder Zucker auf die Ausgangsmaterialschicht gestreut werden.

10. Verfahren zur Herstellung eines pelletisierten oder granulierten Fermentationsprodukts, **dadurch gekennzeichnet,** dass das Fermentationsprodukt erhalten nach dem Verfahren irgendeiner der vorliegenden Ansprüche granuliert oder pelletisiert wird.

11. Verwendung der nach dem Verfahren des Anspruchs 10 erhaltenen Fermentationspellets oder -granulate, als Katzenstreu.

12. Verwendung des Fermentationsprodukts erhalten nach irgendeinem der Ansprüche 1 bis 9, oder Fermentationspellets oder -granulate erhalten nach Anspruch 10, als ein Filter in Reinigungssystemen.

## Revendications

1. Procédé de production d'un produit fermenté, dans lequel un produit fermentable mûr est soumis à un traitement par des vers, des bactéries et des champignons, après quoi le produit fermenté est extrait, caractérisé en ce que ledit produit fermenté est pré-déshydraté, après extraction, à une température inférieure à 50°C, puis il est broyé et tamisé, si nécessaire, et est soumis à une dessiccation, au cours de laquelle la température du produit fermenté ne s'élève pas au-dessus de 30°C.

2. Procédé de production selon la revendication 1, caractérisé en ce qu'on utilise comme matériau de base du compost mûri constitué de déchets de légumes, de fruits et de produits du jardin.

3. Procédé de production selon l'une quelconque des revendications précédentes, caractérisé en ce qu'on utilise des vers d'un ou plusieurs types sélectionnés dans les groupes des Lumbricideae, des Eisenieae, des Allolobophoreae, des Dendrobaeneae et des Nightcrawler africains.

4. Procédé de production selon l'une quelconque des revendications précédentes, caractérisé en ce qu'on utilise des bactéries d'un ou plusieurs types sélectionnés parmi la Pseudomonas fluorescens, la Cellevibrio sp., la Bacillus cereus sp. et spp., l'Azotobacter sp., la Flavobacterium sp., et des bactéries du groupe du Rhizobium spp.

5. Procédé de production selon l'une quelconque des revendications précédentes, caractérisé en ce qu'on utilise des champignons d'un ou plusieurs types d'Aspergillus sp., des Basidiomycètes sp., des champignons du groupe des Micorrhizae et des espèces de basse température de Trichoderma harzianum sp.

6. Procédé de production selon l'une quelconque des revendications précédentes, caractérisé en ce que le traitement du produit fermenté se fait dans plus d'une couche.

7. Procédé de production selon l'une quelconque des revendications précédentes, caractérisé en ce que des agents nutritifs albumineux sont ajoutés au matériau de base.

8. Procédé de production selon l'une quelconque des revendications précédentes, caractérisé en ce qu'un unique acide dérivé de sucre est ajouté durant ou après le processus de croissance.

9. Procédé de production selon l'une quelconque des revendications précédentes, caractérisé en ce que les vers, les bactéries, les champignons, les agents nutritifs albumineux et/ou des sucres sont dispersés au travers de la couche du matériau de base.

10. Procédé de production d'un produit fermenté en pastilles ou en grains, caractérisé en ce qu'on granule ou on pastille le produit fermenté obtenu selon le procédé de l'une quelconque des revendications précédentes.

11. Utilisation de pastilles ou de grains de produit fermenté obtenus selon la revendication 10 comme litière pour chats.

12. Utilisation du produit fermenté obtenu selon l'une quelconque des revendications 1 à 9 ou des pastilles ou des grains de produit fermenté obtenus selon la revendication 10 comme filtre dans des systèmes d'épuration.
